(19) Europäisches Patentamt
European Patent Office
Office européen des brevets

(11) **EP 3 404 590 A1**

(12) # EUROPÄISCHE PATENTANMELDUNG

(43) Veröffentlichungstag:
**21.11.2018 Patentblatt 2018/47**

(21) Anmeldenummer: **17171001.5**

(22) Anmeldetag: **15.05.2017**

(51) Int Cl.:
*G06Q 10/04* (2012.01)     *G06Q 50/04* (2012.01)
*H02H 3/00* (2006.01)     *H02H 7/093* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Meinardus, Martin**
  **90480 Nürnberg (DE)**
• **Mielke, Jürgen**
  **96049 Bamberg (DE)**

(54) **VERFAHREN ZUR BESTIMMUNG EINER ZULÄSSIGEN ABWEICHUNG FÜR EIN ANTRIEBSSYSTEM, ANTRIEBSSYSTEM, COMPUTERPROGRAMMPRODUKT UND ANLAGE**

(57) Die Erfindung betrifft ein Verfahren zur Bestimmung einer zulässigen Abweichung (ZA) für ein Antriebssystem (1) und ein Antriebssystem (1). Weiter betrifft die Erfindung eine Anlage, insbesondere eine Papiermaschine. Kennzeichnend für die Erfindung ist es, dass die zulässige Abweichung (ZA) anhand der Differenz von Soll-Drehzahl (n1), Ist-Drehzahl (n2) und einer Ersatz-Drehzahl (n3) bestimmt wird. Die Bestimmung erfolgt in einem ersten Zeitbereich (dt), wobei der erste Zeitbereich (dt) am zeitlichen Anfang der Betriebsphase angeordnet ist. Durch die Erfindung wird die Bestimmung der zulässigen Abweichung (ZA) für das Bedienpersonal der Anlage, die das Antriebssystem (1) aufweist, vereinfacht.

FIG 1

EP 3 404 590 A1

**Beschreibung**

Die Erfindung betrifft ein Verfahren zur Bestimmung einer zulässigen Abweichung für ein Antriebssystem und ein Antriebssystem. Weiter betrifft die Erfindung eine Anlage, insbesondere eine Papiermaschine und ein Computerprogrammprodukt.

Drehzahlen von Antrieben unterliegen regelmäßig Schwankungen. Schwankungen können zu Fehlfunktionen bei einer technischen Anlage, beispielhaft einer Papiermaschine führen. Daher wird eine zulässige Abweichung einer Drehzahl festgelegt. Eine Abweichung ist hierbei eine Differenz einer Ist-Drehzahl von einer Solldrehzahl. Je nach Einsatzzweck ist eine zulässige Abweichung anzugeben. Bei Überschreiten der zulässigen Abweichung weist das Antriebssystem in der Regel eine Fehlfunktion auf.

Bei einer fortschrittlichen Lösung erfolgt eine Plausibilitätsprüfung anhand von einer Soll-Drehzahl, einer Ist-Drehzahl und einer weiteren Drehzahl. Die weitere Drehzahl wird beispielhaft aus der Frequenz des Stroms/der Spannung am Motor ermittelt.

Nachteilig an den beiden Verfahren ist, dass die Ermittlung einer jeweils geeigneten zulässigen Abweichung ein langwieriger Prozess ist.

Eine Überwachung einer Drehzahl gemäß dem Stand der Technik wird beispielhaft in der WO 2013/127815 A1 beschrieben.

Es ist Aufgabe der Erfindung, eine Anlage zuverlässig und auf einfache Art und Weise zu betreiben.

Die Aufgabe wird mit Hilfe eines Verfahrens nach Anspruch 1 gelöst. Zur Lösung der Aufgabe dient darüber hinaus ein Computerprogrammprodukt gemäß Anspruch 9. Weiter wird die Erfindung mit einem Antriebssystem nach Anspruch 10 gelöst. Zudem stellt eine Anlage zur Herstellung eines Grundstoffes, insbesondere eine Papiermaschine, mit einem solchen Antriebssystem eine Lösung zu dieser Aufgabe dar.

Vorteilhafte Ausgestaltungen und Weiterbildungen der Erfindung sind Gegenstand der abhängigen Ansprüche.

Der Erfindung liegt die Idee zu Grunde, dass die Abweichung zumindest so groß gewählt sein muss, dass ein immanent vorhandenes Rauschsignal kein Überschreiten der Abweichung zur Folge hat.

Ungeachtet der Art des Rauschens ist ebenfalls zu verhindern, dass ein nur kurzzeitiges Überschreiten nicht notwendig einen Fehler in einem Antriebssystem darstellt.

Auf der anderen Seite darf die zulässige Abweichung nicht zu groß gewählt werden, um bei einer Funktionsstörung schnell zu reagieren.

Mit anderen Worten ist die zulässige Abweichung so zu wählen, dass die zulässige Abweichung gerade so groß gewählt wird, dass zulässige Ungenauigkeiten in der jeweiligen Drehzahl gerade noch innerhalb der zulässigen Abweichung liegen.

Zudem sollte die zulässige Abweichung dann bestimmt werden, wenn die Bestimmung den Lauf des Antriebssystems nicht beeinträchtigt.

Bei dem Verfahren zur Sicherung eines Antriebssystems weist das Antriebssystem einen Motor, optional einen (Frequenz-) Umrichter sowie eine Steuereinheit auf.

Das Verfahren umfasst zumindest die folgenden Schritte:

- Bereitstellung einer Soll-Drehzahl für den Motor, einer Ist-Drehzahl des Motors und einer Ersatz-Drehzahl,
- Vergleich der Ist-Drehzahl mit der Soll-Drehzahl sowie der Ist-Drehzahl mit der Ersatz-Drehzahl sowie der Soll-Drehzahl mit der Ersatz-Drehzahl, wobei der jeweilige Vergleich jeweils eine Abweichung bereitstellt,
- Bestimmung der zulässigen Abweichung aus den Abweichungen,
- Ermittlung der zulässigen Abweichung in einem ersten Zeitbereich.

Der erste Zeitbereich entspricht vorzugsweise dem Zeitbereich, in dem das Antriebssystem noch nicht im Normalbetrieb läuft. Der erste Zeitbereich wird daher auch als Probelauf bezeichnet. Der erste Zeitbereich kann daher unmittelbar nach Starten des Antriebssystems gewählt werden.

Die zulässige Abweichung liegt vorteilhaft bei 0,1 % bis 5 % der Soll-Drehzahl. Bevorzugt liegt die zulässige Abweichung in einem Bereich von 0,1 % und 1 % der Soll-Drehzahl.

Ebenfalls bevorzugt ist die zulässige Abweichung bei 0,1 % bis 5 %, besonders bevorzugt zwischen 0,1 % und 1 %, der Ersatz-Drehzahl.

Der erste Zeitbereich ist vorzugsweise der Zeitbereich der Anlaufphase der Motoren oder des Antriebssystems. In dem ersten Zeitbereich erfolgt regelmäßig eine starke Änderung der Geschwindigkeit. Bei mehreren Motoren ist die Kopplung der Motoren, beispielhaft über eine Warenbahn, noch nicht vollständig ausgeprägt.

Daher ist es vorteilhaft, den ersten Zeitbereich in der Anlaufphase anzuordnen. Der erste Zeitbereich kann bis fünf Sekunden lang sein. Vorteilhaft dauert der erste Zeitbereich eine Sekunde, besonders vorteilhaft nur 500 Millisekunden.

Aus den einzelnen Drehzahlen wird durch die Bildung des Betrages der jeweiligen Differenz eine Abweichung der Drehzahlen ermittelt.

Die zulässige Abweichung kann wie folgt berechnet werden:

1. Die jeweilige Abweichung kann durch eine zeitliche Mittelung des oben genannten Betrages der jeweiligen Differenz bestimmt werden. Die jeweilige Abweichung kann auch in einem ersten Schritt das Maximum der jeweiligen Differenz sein. Die jeweils zulässige Abweichung kann das Produkt aus dem jeweiligen Maximum mit einem Sicherheitsfaktor sein. Der Sicherheitsfaktor ist vorteilhaft im Bereich von 0,5 bis 2 zu wählen.

2. Die jeweilige maximale Abweichung kann auch so berechnet werden, dass die zeitliche Mittelung derart erfolgt, dass Differenzen, die nur für eine sehr kurze Dauer bestehen, herausgefiltert werden und somit ein modifizierter Mittelwert entsteht. Die zulässige Abweichung ist dann das Produkt des modifizierten Mittelwerts mit einem Sicherheitsfaktor. Der Sicherheitsfaktor ist im Bereich von 0,5 bis 2 zu wählen.

In einer besonders einfachen Art und Weise kann die zulässige Abweichung die maximale Abweichung sein, welche während des ersten Zeitbereiches auftritt.

Bei einem Gleichspannungsmotor erfolgt eine Analyse Spannung, die am Motor anliegt. Abhängig von der Drehzahl des Motors bildet sich eine Gegenspannung aus, wobei die Gegenspannung ermittelt wird. Die Analyse erfolgt also in diesem Fall durch die Bestimmung der Elektromotorischen Kraft (EMK). Anhand der Elektromotorischen Kraft und/oder weiterer Charakteristika des Spannungsverlaufs / des Stromverlaufs im Motor wird die Ersatz-Drehzahl bestimmt.

Bei vorzugsweise verwendeten Synchronmotoren oder Asynchronmotoren wird die Ersatzdrehzahl einfach durch die Frequenz des für den Motor bereitgestellten Stroms und/oder der für den Motor bereitgestellten Spannung betrachtet. Gegebenenfalls findet eine Korrektur anhand der Phasenverschiebung zwischen Strom und Spannung statt.

Durch dreifache Bildung der Differenz von Soll-Drehzahl, Ist-Drehzahl und Ersatz-Drehzahl stehen drei Differenzen bereit, die durch eine geeignete Verknüpfung zur zulässigen Abweichungen kombiniert werden können.

Die jeweilige Drehzahl ist gleichbedeutend mit der entsprechenden Drehgeschwindigkeit. Bei einem Linearmotor ist anstelle der Drehzahl oder der Drehgeschwindigkeit eine gewöhnliche Geschwindigkeit zu betrachten.

Näheres zum Vergleich der Ist-Drehzahl, Soll-Drehzahl und Ersatz-Drehzahl findet sich in der PCT-Anmeldung mit dem Aktenzeichen PCT/EP2016/077273 sowie die EP-Anmeldung mit dem Aktenzeichen 15200824.9. Der Inhalt der beiden oben genannten Anmeldungen sei durch Referenz mit in die Beschreibung aufgenommen.

Das Antriebssystem umfasst einen Motor oder mehrere Motoren. In der Regel sind die Motoren, Synchronmotoren oder Asynchronmotoren über jeweils einen Umrichter mit Strom bzw. Spannung versorgt und gesteuert. Alternativ kann ein Teil der Motoren auch als Gleichstrommotoren ausgebildet sein. Die Motoren weisen insbesondere jeweils einen Geber auf, oder der Geber ist dem jeweiligen Motor zugeordnet. Der Geber dient zur Bereitstellung der Ist-Drehzahl.

Die Soll-Drehzahl wird dem Antriebssystem vorgegeben. Die Ersatz-Drehzahl wird vorzugsweise durch Spannungssensoren und/oder Stromsensoren bestimmt. Vorzugsweise erfolgt die Bestimmung im Umrichter selbst.

Bei einem Antriebssystem mit mehreren Motoren sind die Motoren oft in ihrer Drehzahl miteinander gekoppelt. Eine Kopplung der Drehzahlen ergibt sich beispielhaft durch eine Walze oder ein Förderband, das mit zwei Motoren angetrieben wird. Bei gekoppelten Motoren oder auch gekoppelten Antriebssystemen kann auch eine Differenz aus Drehzahlen unterschiedlicher Motoren ermittelt werden und eine zulässige Abweichung einer Differenz zweier Ist-Drehzahlen des jeweiligen Motors zur Bestimmung der jeweiligen zulässigen Abweichung dienen.

Bei einer vorteilhaften Ausgestaltung des Verfahrens weist das Antriebssystem mehrere Motoren auf, wobei dem jeweiligen Motor jeweils eine zulässige Abweichung zugeordnet wird.

Durch die Zuordnung jeweils einer zulässigen Abweichung für jeweils einen Motor kann das Antriebssystem in Bezug auf die zulässige Abweichung vorteilhaft entkoppelt werden. Durch eine Entkopplung der jeweiligen Motoren kann die Bestimmung der zulässigen Abweichung beschleunigt werden.

Bei einer weiteren vorteilhaften Ausgestaltung des Verfahrens wird die jeweilige zulässige Abweichung automatisiert, insbesondere mit Hilfe eines Computerprogrammprodukts, bestimmt.

Zur automatisierten Bestimmung der (jeweiligen) zulässigen Abweichung dient vorzugsweise das Computerprogrammprodukt, welches auf einer Recheneinheit abläuft. Die Recheneinheit ist der Steuereinheit zugeordnet. Vorteilhaft kann durch die automatisierte Bestimmung eine schnelle Bestimmung der zulässigen Abweichung erfolgen. Insbesondere bei einer regelmäßigen Bestimmung der zulässigen Abweichung, beispielhaft zusätzlich zur jeweiligen Anlaufphase alle zwölf Betriebsstunden, erhöht die automatisierte Bestimmung der zulässigen Abweichung die Betriebssicherheit.

Darüber hinaus kann die jeweilige zulässige Abweichung bei wiederkehrenden Betriebsmustern bestimmt werden. Beispielhaft ist ein solches Betriebsmuster das Antriebssystem in eingelaufenen Zustand oder ein zeitlich wiederkehrender Vorgang.

Durch die Anordnung des ersten Zeitbereichs, in welchem das Antriebssystem in der Regel keine Änderungen der jeweiligen Drehzahl durchführt, kann die zulässige Abweichung bestimmt werden. Vorzugsweise wird der erste Zeitbereich mehrmals während der Betriebsphase des Antriebssystems angeordnet, beispielhaft jede Stunde oder jeweils bei einem Anstieg der Drehzahl eines ausgewählten Motors.

Die neu bestimmte zulässige Abweichung kann mit der in der Hochlaufphase bestimmten zulässigen Abweichung verglichen werden. Gegebenenfalls kann die zulässige Abweichung korrigiert werden.

Durch die automatisierte Bestimmung der zulässigen Abweichung kann das Bedienpersonal entlastet werden.

Bei einer weiteren vorteilhaften Ausgestaltung des Verfahrens wird bei einer Überschreitung der jeweilig zulässigen Abweichung über einen zweiten Zeitbereich hinaus, ein Warnsignal ausgegeben.

Der Zeitbereich ist vorzugsweise zwischen 50 Nanosekunden und etwa 5 Mikrosekunden. Durch eine Anpassung des zweiten Zeitbereichs kann die Rauschempfindlichkeit des Sicherungssystems eingestellt werden. Durch eine Wahl eines großen zweiten Zeitbereichs im Bereich von Mikrosekunden oder gar Millisekunden können nicht beabsichtigte Warnsignale vermieden werden.

Bei einer weiteren vorteilhaften Ausgestaltung des Verfahrens wird die Ersatzdrehzahl anhand der Frequenz des Motorstroms (oder der Motorspannung) aus dem Umrichter bestimmt.

Die Bestimmung erfolgt vorzugsweise im (Frequenz-)Umrichter oder mit Hilfe eines Sensors, der dem Umrichter zugeordnet ist.

Bei einem Gleichstrommotor erfolgt die Bestimmung der Ersatz-Drehzahl anhand der elektromotorischen Kraft (EMK) und/oder dem magnetischen Fluss im Motor.

Insbesondere bei Gleichspannungsmotoren ist die Ersatz-Drehzahl proportional des Quotienten der Elektromotorischen Kraft (EMK) und dem magnetischen Fluss.

Insbesondere durch die Bestimmung einer Gegenspannung, die zwischen den jeweiligen Spulen beim jeweiligen Motor anliegt, kann die Ersatzdrehzahl des jeweiligen Motors bestimmt werden.

Vorteilhaft erfolgt die Bestimmung der Ersatzdrehzahl in dem Frequenzumrichter.

Bei einer vorteilhaften Ausgestaltung des Verfahrens wird eine erste Abweichung aus der Differenz der Ist-Drehzahl und der Soll-Drehzahl bestimmt wird, eine zweite Abweichung wird aus der Differenz der Soll-Drehzahl und der Ersatz-Drehzahl sowie eine dritte Abweichung aus der Ist-Drehzahl und der Ersatz-Drehzahl bestimmt, wobei die zulässige Abweichung eine Summe der jeweiligen Abweichungen ist.

$$A1 = |n2 - n1|$$
$$A2 = |n1 - n3|$$
$$A2 = |n2 - n3|$$

$$ZA = A1 + A2 + A3$$

oder als geometrisches Mittel:

$$ZA = \sqrt{A1^2 + A2^2 + A3^2}$$

Hierbei bezeichnen A1 die erste Abweichung, A2 die zweite Abweichung und A3 die dritte Abweichung. Weiter bezeichnen n1 die Soll-Drehzahl, n2 die Ist-Drehzahl und n3 die Ersatz-Drehzahl.

Vorteilhaft kann so die zulässige Abweichung schnell und einfach bestimmt werden.

Bei einer vorteilhaften Ausgestaltung wird die jeweilige Abweichung in regelmäßigen Abständen neu bestimmt.

Bei dieser vorteilhaften Ausgestaltung wird die zulässige Abweichung in dem ersten Zeitbereich bestimmt und der erste Zeitbereich wird in der Hochlaufphase und/oder immer wieder zu bestimmten Zeitpunkten angeordnet. Bevorzugt wird die zulässige Abweichung nur dann durch die neu ermittelte zulässige Abweichung ersetzt, falls diese z.B. in der Größe korreliert sind, also z.B. bis maximal 20 % geringer ist.

Unter regelmäßigen Abständen können regelmäßige zeitliche Abstände oder an bestimmten Drehzahlverhalten orientierte Phasen gemeint sein.

Vorteilhaft kann so die zulässige Abweichung einer Betriebsphase des Antriebssystems angepasst werden. So können die Werte der zulässigen Abweichung zunehmend dem Betrieb des Antriebssystems angepasst werden.

Bei einer weiteren vorteilhaften Ausgestaltung des Verfahrens erfolgt die Bestimmung der zulässigen Abweichung während der Hochlaufphase und/oder einem Probelauf des Antriebssystems.

Bei einer weiteren vorteilhaften Ausgestaltung des Verfahrens umfasst das Antriebssystem eine Mehrzahl von Motoren, wobei die jeweiligen Abweichungen gemäß dem in den Ansprüchen beschrieben Verfahren bestimmt werden.

Bei einem Antriebssystem mit mehreren Motoren sind die Drehzahlen in vielen Fällen gekoppelt. Beispielhaft bei einem Förderband sind die Drehzahlen der Motoren, welche das Förderband antreiben, über das Förderband gekoppelt. Bei einem Antriebssystem mit mehreren Motoren sind folgende Ausgestaltungen denkbar:

- Eine zulässige Abweichung, die für einen Motor bestimmt wurde, dient ebenfalls für die anderen Motoren.

- Die zulässige Abweichung wird bei jeweils zumindest einem Motor in jeweils einem ersten Zeitbereich bestimmt und eine allgemeine zulässige Abweichung wird den anderen Motoren zugeordnet. Hierbei kann die allgemeine zulässige Abweichung als die, insbesondere geometrische, Summe der zulässigen Abweichungen des jeweiligen Motors bestimmt werden.

- Die Bestimmung der zulässigen Abweichung findet in jeweils ersten Zeitbereichen statt, wobei die jeweiligen ersten Zeitbereiche sich lediglich bereichsweise zeitlich überlappen oder zeitlich disjunkt sind.

Das Antriebssystem weist zumindest einen Motor, optional einen Umrichter und eine Steuereinrichtung auf, wobei dem Motor ein Geber zugeordnet ist,

- wobei der Geber zur Bereitstellung einer Ist-Drehzahl ausgebildet ist,
- wobei ein Sensor oder der Umrichter eine Ersatz-Drehzahl bereitstellt,
- wobei zur Bestimmung der zulässigen Abweichung das hier beschrieben Verfahren vorgesehen ist.

Die Steuereinrichtung dient zur Bestimmung der zulässigen Abweichung gemäß dem hier beschriebenen Verfahren. Die Steuereinrichtung weist demnach Eingänge für die Soll-Drehzahl, für die Ist-Drehzahl sowie für die Ersatz-Drehzahl auf. Anstelle der Ersatz-Drehzahl kann auch ein Eingang für die elektromotorische Kraft, das ist die Gegenspannung, die in Abhängigkeit der Drehzahl von dem Motor bereitgestellt wird, vorhanden sein. Die Steuereinrichtung ist als Bewegungssteuerung oder als Speicherprogrammierbare Steuerung (SPS) ausgebildet.

Bei einer vorteilhaften Ausgestaltung des Antriebssystems gibt die Steuereinheit bei Überschreiten der zulässigen Abweichung ein Warnsignal aus.

Das Warnsignal deutet auf eine Fehlfunktion des Antriebes und/oder der Anlage hin. Das Warnsignal kann zur Ausgabe eines akustischen/optischen Alarmsignals vorgesehen sein. Das Warnsignal kann ebenfalls zum Stillstand des Antriebssystems oder zum Stillstand der Anlage führen, welche das Antriebssystem umfasst.

Bei einer weiteren vorteilhaften Ausgestaltung des Antriebssystems umfasst dies zudem einen (Frequenz-)Umrichter, wobei die Steuereinrichtung dem Umrichter zugeordnet ist.

In einer weiteren vorteilhaften Ausgestaltung der Erfindung erfolgt die Ermittlung der Ersatzdrehzahl in dem Umrichter.

Die Steuereinheit weist hierbei einen Eingang für die Frequenz der Spannung und/oder des Stroms auf, welche/welcher für den jeweiligen Motor bereitgestellt wird. Die Steuereinheit kann eine Erweiterung der Steuerung des Frequenzumrichters selbst sein. Bei einer Software-Ausbildung der Steuerung des (Frequenz-)Umrichters ist die Steuereinheit ggf. als Software-Applikation ausgeführt.

Im Folgenden wird die Erfindung anhand Figuren näher beschrieben und erläutert. Hierbei stellen die in den Figuren gezeigten Ausgestaltungen keine Einschränkungen der Erfindung dar. Es zeigen:

FIG 1    ein Antriebssystem,
FIG 2    ein Verfahren,
FIG 3    einen Drehzahlverlauf mit Ausschnitt sowie

FIG 4    einen Ausschnitt des ersten Drehverlaufs.

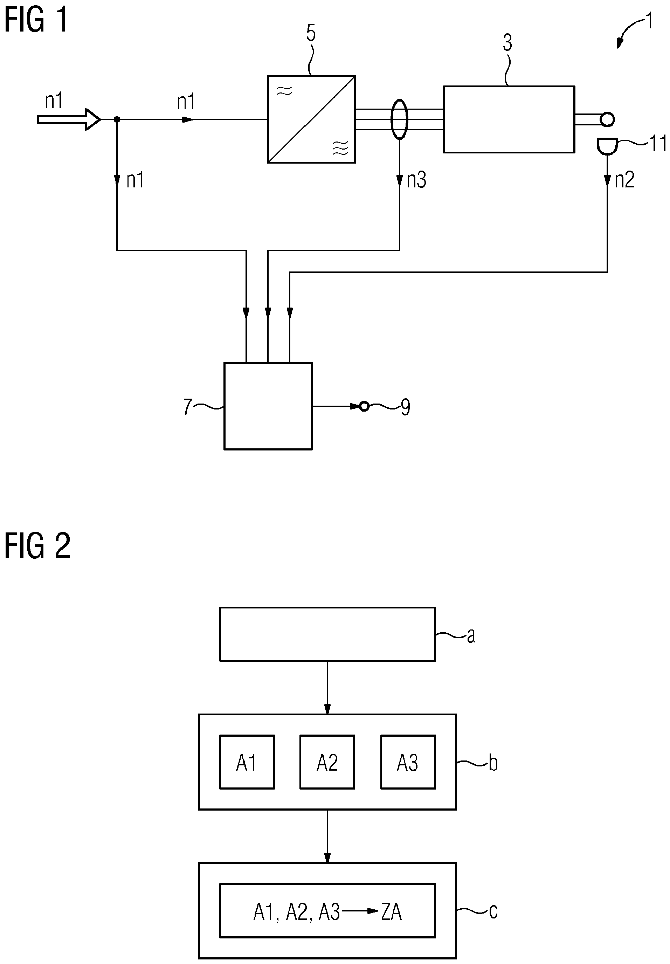

**FIG 1** zeigt ein Antriebssystem 1 mit einem Motor 3. Der Motor 3 wird durch einen (Frequenz-)Umrichter 5 mit einer Wechselspannung versorgt. Dem Umrichter 5 wird eine Soll-Drehzahl n1 bereitgestellt. Die Soll-Drehzahl n1 wird auch einer Steuereinrichtung 7 bereitgestellt. Dem Motor 3 ist ein Geber 11 zugeordnet. Der Geber 11 kann dabei Teil des Motors 3 sein.

Der Geber bestimmt die Ist-Drehzahl n2 und stellt die Ist-Drehzahl n2 der Steuereinheit 7 bereit. Weiter findet eine Analyse der Wechselspannung statt, welche dem Motor 3 bereitgestellt wird. Hierbei wird insbesondere die Frequenz des Stroms oder der Spannung für den Motor 3 bestimmt. Aus der Frequenz wird eine Ersatz-Drehzahl n3 ermittelt. Die Ersatz-Drehzahl n3 wird der Steuereinheit 7 bereitgestellt. Die Steuereinheit 7 überwacht die Abweichung der einzelnen Drehzahlen n1, n2, n3 (Ist-Drehzahl, Soll-Drehzahl und Ersatz-Drehzahl). Die Steuereinheit 7 vergleicht die Abweichung der Drehzahlen untereinander und vergleicht die Abweichungen mit einer zulässigen Abweichung ZA. Bei Überschreiten der zulässigen Abweichung ZA gibt die Steuereinheit ein Warnsignal 9 aus. Das Warnsignal 9 führt zu einer sichtbaren Signalwirkung (Alarm) oder dem Anhalten des Motors 3.

**FIG 2** zeigt ein Verfahren. Das Verfahren bestimmt die zulässige Abweichung ZA aus den jeweiligen Differenzen der Drehzahlen n1, n2, n3.

In einem ersten Verfahrensschritt a wird die Soll-Drehzahl bereitgestellt. Die Soll-Drehzahl des jeweiligen Motors 3 wird beispielhaft von einer übergeordneten Bewegungssteuerung (in FIG 1 nicht gezeigt) vorgegeben.

In einem zweiten Verfahrensschritt b werden die jeweiligen Abweichungen A1, A2, A3 bestimmt. Hierbei gilt, dass die erste Abweichung A1 die Differenz der Ist-Drehzahl n2 und der Soll-Drehzahl n1 ist, die zweite Abweichung A2 die Differenz der Soll-Drehzahl n1 und der Ersatz-Drehzahl n3 ist sowie die dritte Abweichung A3 die Differenz der Ist-Drehzahl n2 und der Ersatz-Drehzahl n3 ist.

Zur Bestimmung der zulässigen Abweichung ZA wird die Summe, insbesondere die geometrische Summe, aus der ersten Abweichung A1, der zweiten Abweichung A2 und der dritten Abweichung A3 gebildet. Die Bildung der Summe A1+A2+A3=ZA zur Bestimmung der zulässigen Abweichung ZA erfolgt im dritten Verfahrensschritt c.

Der erste Verfahrensschritt a, der zweite Verfahrensschritt b und der dritte Verfahrensschritt c erfolgen im ersten Zeitbereich.

Die Bestimmung der jeweiligen Abweichung A1, A2, A3 erfolgt in einem ersten Zeitbereich dt. Die Bestimmung der jeweiligen Abweichung erfolgt beispielhaft aus der jeweils maximalen Abweichung in dem ersten Zeitbereich.

Vorteilhaft können Abweichungen A1, A2, A3 nicht bei der Bestimmung der zulässigen Abweichung ZA beachtet werden, falls die Abweichung nicht mindestens über einen zweiten Zeitbereich andauert. Durch Wahl dieses zweiten Zeitbereiches im Bereich von einigen Nanosekunden oder Mikrosekunden können Rausch-Effekte aussortiert werden.

Die zulässige Abweichung wird in der Steuereinheit 7 bestimmt.

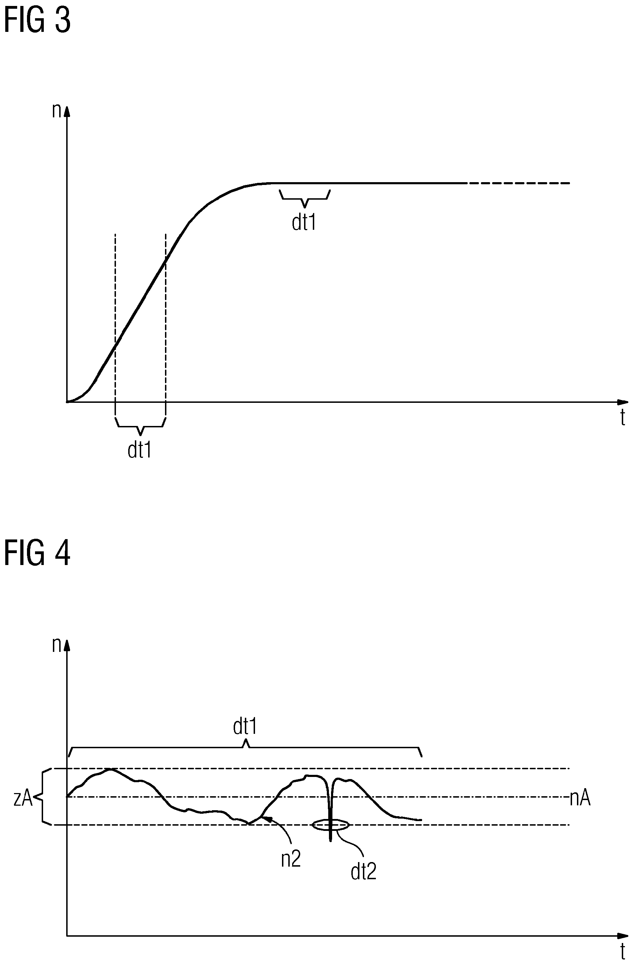

**FIG 3** zeigt einen Drehzahlverlauf mit einem Ausschnitt. Gezeigt ist die Drehzahl n eines Motors als Funktion der Zeit t. Zu Anfang der Betriebsphase des Motors 3 bzw. des Antriebssystems 1 steigt die Drehzahl auf einen konstanten Wert an. Die Phase des Anstiegs der Drehzahl wird auch als Hochlaufphase bezeichnet. Alternativ kann auch ein Probelauf PL erfolgen, wie durch die gestrichelte Kurve angezeigt. Ein solcher Probelauf PL findet vor der eigentlichen Betriebsphase des Antriebssystems 1 statt.

In der Hochlaufphase oder während des Probelaufs PL ist der erste Zeitbereich dt1 angeordnet. Ein erster Zeitbereich dt kann auch während der Betriebsphase des Antriebssystems 1 angeordnet sein.

**FIG 4** zeigt einen Ausschnitt des Drehzahlverlaufs. Es ist Verlauf der Drehzahl n als Funktion der Zeit t gezeigt. Der Drehzahlverlauf ist in einem solchen ersten Zeitbereich dt1 gezeigt. Während des ersten Zeitbereichs dt1 erfolgt ein Vergleich der Drehzahlen n1, n2, n3.

Im unteren Bereich ist auch ein zweiter Zeitbereich dt2 gezeigt. Der zweite Zeitbereich dt2 ist größer als die Zeitdauer einer durch Rauschen verursachte Drehzahl n1, n2, n3 bemessen.

Zusammenfassend betrifft die Erfindung ein Verfahren zur Bestimmung einer zulässigen Abweichung ZA für ein Antriebssystem 1 und ein Antriebssystem 1. Weiter betrifft die Erfindung eine Anlage, insbesondere eine Papiermaschine. Kennzeichnend für die Erfindung ist es, dass die zulässige Abweichung ZA anhand der Differenz von Soll-Drehzahl n1, Ist-Drehzahl n2 und einer Ersatz-Drehzahl n3 bestimmt wird. Die Bestimmung erfolgt in einem ersten Zeitbereich dt, wobei der erste Zeitbereich dt1 am zeitlichen Anfang der Betriebsphase angeordnet ist. Durch die Erfindung wird die Bestimmung der zulässigen Abweichung ZA für das Bedienpersonal der Anlage, die das Antriebssystem 1 aufweist, vereinfacht.

**Patentansprüche**

1. Verfahren zur Bestimmung einer zulässigen Abweichung (ZA) für ein Antriebssystem (1), wobei das Antriebssystem (1) einen Motor (3), optional einen Frequenzumrichter (5) sowie eine Steuereinrichtung (7) umfasst, wobei das Verfahren die folgenden Schritte umfasst:

   - Bereitstellung einer Soll-Drehzahl (n1) für den Motor (3), einer Ist-Drehzahl (n2) des Motors (3) und einer Ersatz-Drehzahl (n3),
   - Vergleich der Ist-Drehzahl (n3) mit der Soll-Drehzahl (n1) sowie der Ist-Drehzahl (n2) mit der Ersatz-Drehzahl (n3) sowie der Soll-Drehzahl (n1) mit der Ersatz-Drehzahl (n3), wobei der jeweilige Vergleich jeweils eine Abweichung (A1, A2, A3) bereitstellt,
   - Berechnung der zulässigen Abweichung (ZA) aus den Abweichungen (A1, A2, A3),

   wobei die zulässige Abweichung (ZA) in einem ersten Zeitbereich (dt1) ermittelt wird.

2. Verfahren nach Anspruch 1, wobei das Antriebssystem (1) mehrere Motoren (3) aufweist und dem jeweiligen Motor (3) jeweils eine zulässige Abweichung (ZA) zugeordnet wird.

3. Verfahren nach Anspruch 1 oder 2, wobei die jeweilige zulässige Abweichung (ZA) automatisiert, insbesondere mit Hilfe eines Computerprogrammproduktes, bestimmt wird.

4. Verfahren nach einem der vorangehenden Ansprüche, wobei bei einer Überschreitung der jeweilig zulässigen Abweichung (ZA) über einen zweiten Zeitbereich, insbesondere von 50 Nanosekunden bis 5 Mikrosekunden, ein Warnsignal bereitgestellt wird.

5. Verfahren nach einem der vorangehenden Ansprüche, wobei die Bestimmung der Ersatz-Drehzahl (n3) anhand eines Motorstroms bestimmt wird, insbesondere in einem (Frequenz-) Umrichter (5).

6. Verfahren nach einem der vorangehenden Ansprüche, wobei eine erste Abweichung (A1) aus der Differenz der Ist-Drehzahl (n2) und der Soll-Drehzahl (n1) bestimmt wird, die zweite Abweichung (A2) aus der Differenz der Soll-Drehzahl (n1) und der Ersatz-Drehzahl (n3) sowie eine dritte Abweichung (A3) aus der Ist-Drehzahl (n2) und der Ersatz-Drehzahl (n3) bestimmt wird, wobei die zulässige Abweichung (ZA) eine Summe der ersten Abweichungen (A1), der zweiten Abweichung (A2) und der dritten Abweichung (A3) ist.

7. Verfahren nach einem der vorangehenden Ansprüche, wobei die Bestimmung der zulässigen Abweichung (ZA) während der Hochlaufphase und/oder einem Probelauf des Antriebssystems erfolgt.

8. Verfahren nach einem der vorangehenden Ansprüche, wobei die jeweilige Abweichung (A1, A2, A3; ZA) in regelmäßigen Abständen neu bereitgestellt wird.

9. Computerprogrammprodukt zur Installation und Ablauf auf einer Recheneinheit, wobei das Computerprogrammprodukt zur Durchführung eines Verfahrens nach einem der vorangehenden Ansprüche vorgesehen ist.

10. Antriebssystem, aufweisend zumindest einen Motor (3), optional einen Umrichter (5) und eine Steuereinrichtung (7), wobei dem Motor (3) ein Geber (11) zugeordnet ist,

> - wobei der Geber (11) zur Bereitstellung einer Ist-Drehzahl (n2) ausgebildet ist,
> - wobei ein Sensor oder der Umrichter (5) eine Ersatz-Drehzahl (n3) bereitstellt,

**dadurch gekennzeichnet, dass** zur Bestimmung der zulässigen Abweichung ein Verfahren nach einem der Ansprüche 1 bis 8 vorgesehen ist.

11. Antriebssystem nach Anspruch 10, wobei die Steuereinrichtung (7) bei Überschreiten der zulässigen Abweichung (ZA) ein Warnsignal (9) ausgibt.

12. Antriebssystem nach einem der Ansprüche 10 oder 11, wobei die Bestimmung der Ersatzdrehzahl (n3) mit Hilfe des Umrichters (5) ermittelt wird.

13. Anlage zur Herstellung eines Grundstoffs, beispielhaft eine Papiermaschine, aufweisend ein Antriebssystem nach einem der Ansprüche 10 bis 12.

FIG 1

FIG 2

## FIG 3

## FIG 4

**Europäisches Patentamt**
**European Patent Office**
**Office européen des brevets**

# EUROPÄISCHER RECHERCHENBERICHT

Nummer der Anmeldung

EP 17 17 1001

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2012 219914 A1 (CONTINENTAL TEVES AG & CO OHG [DE]) 30. April 2014 (2014-04-30) * Zusammenfassung; Abbildungen 1,2 * * Absätze [0003], [0006], [0009] - [0014], [0026], [0028], [0030] - [0037] * | 1-13 | INV. G06Q10/04 G06Q50/04 H02H3/00 H02H7/093 |
| X | ----- DE 195 30 385 A1 (PETER ZARDEN INGENIEURGESELLSC [DE]) 20. Februar 1997 (1997-02-20) * Zusammenfassung; Abbildung 1 * * Spalte 1, Zeile 11 - Spalte 2, Zeile 29 * * Spalte 2, Zeile 50 - Spalte 3, Zeile 48 * | 1-13 | |
| X | ----- DE 100 17 861 A1 (KSB AG [DE]) 15. März 2001 (2001-03-15) * Zusammenfassung; Abbildung 1 * * Spalte 1, Zeilen 1-15, 52-68 * * Spalte 2, Zeilen 8-25 * * Spalte 2, Zeile 52 - Spalte 3, Zeile 62 * ----- | 1-13 | RECHERCHIERTE SACHGEBIETE (IPC) G06Q H02H |

Der vorliegende Recherchenbericht wurde für alle Patentansprüche erstellt

| Recherchenort | Abschlußdatum der Recherche | Prüfer |
|---|---|---|
| Den Haag | 19. Juli 2017 | Berlea, Alexandru |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 17 17 1001

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-2017

| Im Recherchenbericht angeführtes Patentdokument | Datum der Veröffentlichung | Mitglied(er) der Patentfamilie | Datum der Veröffentlichung |
|---|---|---|---|
| DE 102012219914 A1 | 30-04-2014 | KEINE | |
| DE 19530385 A1 | 20-02-1997 | KEINE | |
| DE 10017861 A1 | 15-03-2001 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013127815 A1
- EP 2016077273 W
- EP 15200824 A